# EUROPEAN PATENT APPLICATION

(11) **EP 2 824 747 A1**
(43) Date of publication of application: **14.01.2015**
(21) Application number: 14176678.2
(22) Date of filing: 11.07.2014
(51) Int. Cl.: H01M 8/18, H01M 8/02, H01M 8/04

(54) **Redox flow battery and cell frame**

(30) Priority: 12.07.2013 KR 20130082065; 12.07.2013 KR 20130082169
(71) Applicant: OCI Company Ltd., Seoul 100-718 (KR)
(72) Inventor: Kim, Soo-Whan, 462-807 Gyeonggi-do (KR); Um, Myung-Sup, 462-807 Gyeonggi-do (KR); Kim, Tae-Yoon, 462-807 Gyeonggi-do (KR); Ha, Tae-Jung, 462-807 Gyeonggi-do (KR); Bang, Yoo-Kyung, 462-807 Gyeonggi-do (KR)
(74) Representative: Jakobsson, Jeanette Helene

(57) **Abstract**

Disclosed herein are a redox flow battery and a cell frame. In a cell frame of a redox flow battery, the cell frame comprising: a pair of unit frames adhered to each other; a protection plate shared by the unit frames, wherein each unit frame includes an electrolyte channel formed on a contact region of the unit frame with the protection plate; and a bipolar plate on which an electrolyte flows, wherein the electrolyte is supplied through the electrolyte channel. The cell frame has an integration type structure in which the protection plate is positioned in the cell frame, such that leakage of the electrolyte may be effectively prevented.

## Description

### BACKGROUND OF THE INVENTION

### 1. Technical Field

The present invention relates to a redox flow battery and a cell frame, and more particularly, to a redox flow battery and a cell frame capable of effectively preventing leakage of an electrolyte in the cell frame by including an electrolyte channel protection plate between a pair of unit frames adhered to each other, and having excellent durability.

### 2. Description of the Related Art

Recently, a global effort to decrease greenhouse gas has been made due to environmental contamination and global warming, and as a part of the effort, various efforts such as introduction enlargement of new renewable energy, development of an eco-friendly vehicle, development of a power storage system for improving a power demand and supply system have been attempted.

In most of the power supply systems, a thermal power generation is prominent, but in thermal power generation, a large amount of CO₂ gas is emitted by using fossil fuel, and an environmental contamination problem due to the emitted CO2 gas is significantly serious. In order to solve this problem, development of a power supply system using eco-friendly energy (wind power, solar energy, tidal power, or the like) has been rapidly increased.

Since most of the new renewable energy uses clean energy generated in the nature, the new renewable energy produces no exhaust gases associated with environmental contamination, which is attractive. However, since the new renewable energy is significantly affected by natural environments, an output variation width depending on time is significantly large, such that there is a limitation in using the new renewable energy.

A power storage technology is an important technology for efficient use of power, improvement of performance or reliability of a power supply system, overall efficient use of energy such as expansion of introduction of new renewable energy having a large variation width depending on time, or the like, and development possibility of the power storage technology and a demand for social contribution thereof have been gradually increased. Particularly, expectation for utilization of a secondary battery has been increased in the field as described above.

A redox flow secondary battery has advantage in that it may flexibly change an electrolyte tank capacity and the number of cell stacks to easily change energy storage capacity and output and be semi-permanently used, such that the redox flow secondary battery is a most prominent secondary battery for storing large-capacity power to which a high capacity and high efficiency secondary battery should be applied.

The redox flow secondary battery means a battery charged and discharged using an oxidation reduction reaction of a metal ion of which an oxidation number is changed. As a positive electrode/negative electrode electrolyte, an acidic aqueous solution in which metal ions such as vanadium ions, or the like, are dissolved is used, and the positive electrode and negative electrode electrolytes are stored at different tanks from each other.

In the redox flow secondary battery, a cell frame forms an outline of the entire cell, and a central portion of the cell is separated by a membrane, and a positive electrode and a negative electrode are positioned based on the membrane. In addition, a bipolar plate and a current collector for electrical conduction are configured, and an electrolyte inlet part and an electrolyte outlet part of the redox flow secondary battery are connected to the electrolyte tank to perform an electrochemical reaction while circulating the electrolyte.

A cell stack is configured by stacking a plurality of cell frames, and a stack output may be increased by repeatedly stacking the cell frame, the membrane, and the cell frame.

In the cell frame, it is important to receive the electrolyte therein and allow the electrolyte to be suitably supplied and released without leakage of the electrolyte. A protection plate cover is present between each of the cell frames as a unit for protecting an electrolyte channel. In the case of the protection plate cover, a positive electrode solution and a negative electrode solution are not mixed and leakage of the electrolyte is prevented by covering a cell frame in which grooves such as the electrolyte inlet part, the electrolyte outlet part, a distribution channel, and the like, are formed. For example, in the case of a cell frame disclosed in Japanese Patent Registration No. 2005-3682244, there is a protection plate covering an electrolyte channel, but the protection plate is partially positioned on a surface of the cell frame. In this case, since the processing of the cell frame is complicated, and the protection plate is not completely integrated with the cell frame, the protection plate may be separated due to a durability problem, such that leakage of the electrolyte may not be completely prevented.

Since in the case in which the electrolyte is leaked, battery capacity may be decreased, and a problem in durability of a system may be generated, a cell frame capable of preventing leakage of an electrolyte and having excellent durability should be urgently developed.

### SUMMARY OF THE INVENTION

The present invention has been made in an effort to provide a redox flow battery and a cell frame capable of preventing leakage of an electrolyte to stably operate.

In addition, the present invention has been made in an effort to provide a redox flow battery and a cell frame capable of preventing a stack output from being decreased to thereby have high efficiency and improve reliability of a device.

Further, the present invention has been made in an effort to provide a redox flow battery and a cell frame capable of having a simple coupling process due to a protection plate and a unit frame integrated with each other and having excellent durability.

According to an exemplary embodiment of the present invention, there is provided a cell frame of a redox flow battery, the cell frame comprising: a pair of unit frames adhered to each other; a protection plate shared by the unit frames, wherein each unit frame includes an electrolyte channel formed on a contact region of the unit frame with the protection plate; and a bipolar plate on which an electrolyte flows, wherein the electrolyte is supplied through the electrolyte channel. Thicknesses of the protection plate and the bipolar plate may be the same as each other.

The electrolyte channel may comprises: an electrolyte introduction part; a first distribution channel connected to the electrolyte introduction part; a first insertion channel connected to the first distribution channel, and configured to provide the electrolyte to the bipolar plate; a second insertion channel configured to discharge the electrolyte from the bipolar plate; a second distribution channel connected to the second insertion channel; and an electrolyte discharge part connected to the second distribution channel. The unit frame and the protection plate may comprise an insulation material or an acid resistant material, and comprise at least one selected from the group consisting of a vinyl chloride resin, polypropylene, polyethylene, a fluorine resin, an epoxy resin, polyethylene, a fluorine resin, and an epoxy resin. In the case of an adhesive adhering to the unit frame, the bipolar plate, and the protection plate to each other, any adhesive may be used as long as it has an excellent adhesion property and is not easily deformed at an operation temperature. In addition, the bipolar plate may comprise a plastic carbon material, graphite, a carbon microparticle, or a material including chlorine and having excellent electric conductivity.

According to another exemplary embodiment of the present invention, there is provided a redox flow battery, comprising a cell frame which comprises: a pair of unit frames adhered to each other; a protection plate between the pair of unit frames; an electrolyte channel formed on a contact region of each unit frame with the protection plate; and a bipolar plate positioned at a portion that does not contact the electrolyte channel, wherein the protection plate is provided at an outer peripheral portion of the bipolar plate. Thicknesses of the protection plate and the bipolar plate may be the same as each other, and the unit frame and the protection plate may comprise an insulation material. Therefore, the protection plate may protect the electrolyte channel in the cell frame, thereby making it possible to effectively prevent leakage of the electrolyte.

### BRIEF DESCRIPTION OF THE DRAWINGS

The above and other objects, features and advantages of the present invention will be more clearly understood from the following detailed description taken in conjunction with the accompanying drawings, in which:
FIG. 1 is a planar view of a unit frame;
FIG. 2 is a planar view of a protection plate according to the present invention;
FIG. 3 is a perspective view showing a assembling state of the protection plate according to the present invention; and
FIG. 4 is a perspective view showing a combination state of a cell frame.

### DESCRIPTION OF THE PREFERRED EMBODIMENTS

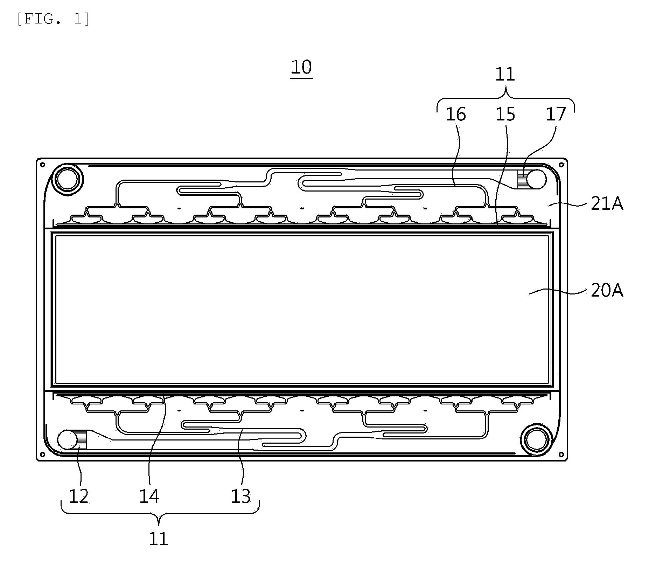

FIG. 1 is a planar view of a unit frame 10 configuring a cell frame. Referring to FIG. 1, an electrolyte channel 11 is formed at upper and lower end portions of a contact region the unit frame 10.

The electrolyte channel 11 is composed of an electrolyte inlet part 12, a first distribution channel 13, a first penetration channel 14, a second penetration channel 15, a second distribution channel 16, and an electrolyte outlet part 17.

An electrolyte supplied from a tank is introduced in the electrolyte inlet part 12 and uniformly distributed through the first distribution channel 13. The distributed electrolyte is supplied to a front surface of a bipolar plate through the first penetration channel 14. Then, the electrolyte is released from the front surface of the bipolar plate 20 to the second distribution channel 16 positioned at an inner portion of the cell frame through the second penetration channel 15, and the electrolyte distributed through the second distribution channel is gathered and released to the electrolyte outlet part 17 to thereby be returned to the tank.

The electrolyte channel 11 is formed at the upper and lower end portions of the contact region of the unit frame 10, and an insertion hole 20A is formed at a central portion of the unit frame 10 so that the bipolar plate 20 may be inserted therein. An electrolyte channel 21A of the unit frame 10 contacts a protection plate 21, and the insertion hole 20A faces the bipolar plate 20, such that the protection plate 21 may be easily adhered and integrally coupled between each of the unit frames 10.

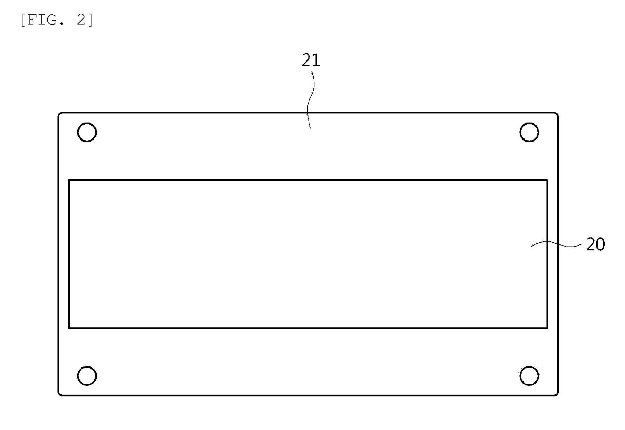

FIG. 2 is a planar view of the protection plate 21 according to the present invention. Referring to FIG. 2, the protection plate 21 is configured so as to correspond to a shape in which the insertion hole 20A is formed at the central portion of the unit frame 10 so that the bipolar plate 20 may be inserted therein as shown in FIG. 1.

The protection plate 21 has a tetragonal plate shape and a structure in which it is penetrated in a shape of the bipolar plate 20 so that the bipolar plate 20 may be inserted at a central portion of the protection plate, such that the bipolar plate 20 is inserted into the protection plate 21.

The protection plate 21 provided at an outer peripheral portion of the bipolar plate 20 is to protect the electrolyte inlet part 12, the first distribution channel 13, the first penetration channel 14, the second penetration channel 15, the second distribution channel 16, and the electrolyte outlet part 17, which are included in the electrolyte channel 11 of the unit flame 10.

The protection plate 21 may prevent leakage of the electrolyte by tightly covering the electrolyte channel of each of the unit frames 10. In addition, since thicknesses of the bipolar plate 20 and the protection plate 21 may be the same as each other, a gap between the contact regions of the unit frames 10 due to a thickness deviation is not generated. In addition, the protection plate 21 and the unit frame 10 are formed to have the same size and shape as each other, and the protection plate 21 is adhered between the unit frames 10, such that an integration type cell frame may be configured.

The unit frame 10 and the protection plate 21 may comprise materials having electric insulation, acid resistance, and mechanical strength and be injection molded using materials at least one selected from the group consisting of a vinyl chloride resin, polypropylene, polyethylene, a fluorine resin, an epoxy resin. In the case of an adhesive connecting the unit frame, the bipolar plate, and the protection plate to each other, any adhesive may be used as long as it has an excellent adhesion property and is not easily deformed at an operation temperature. In addition, the bipolar plate 20 may comprise a plastic carbon material, graphite, a carbon microparticle, or a material including chlorine and having excellent electric conductivity.

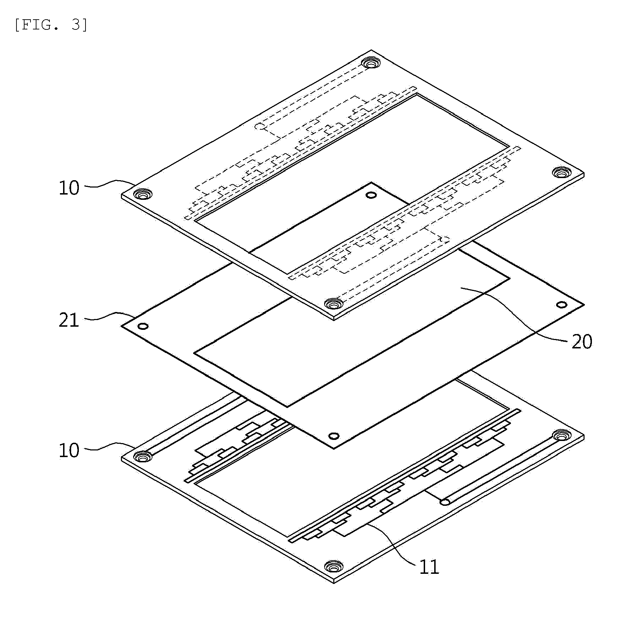

FIG. 3 is a perspective view showing an assembling state of the protection plate 21 according to the present invention. Referring to FIG. 3, the unit frame 10, the protection plate 21, and the unit frame 10 are sequentially assembled, and the protection plate 21 is interposed between each of the unit frames 10.

The electrolyte channel formed on the contact region of the unit frame 10 faces the protection plate 21, and a insertion hole 20A of the unit frame 10 in which the electrolyte channel is not formed faces the bipolar plate 20. Since the bipolar plate 20 having an area wider than that of the insertion hole 20A is adhered to the unit frame 10, when a pair of unit frames 10 are adhered to each other, a gap between the bipolar plate 20 and the unit frame 10 is not generated, and the bipolar plate 20 is not separated. Further, the protection plate 21 is not overlapped with the bipolar plate 20, and positioned at a surface except for an adhesion part between the unit frame 10 and the bipolar plate 20 to protect the electrolyte channel 11. The protection plate 21 is positioned between the unit frames 10 to tightly cover the electrolyte channel 11 at the time of adhesion, thereby making it possible to prevent the electrolyte from being mixed and leaked. Further, since the shapes of the insertion hole 20A, the protection plate 21, and the bipolar plate 20 formed on each of the unit frames 10 correspond to each other, at the time of adhesion, the unit frame 10 and the protection plate 21 may be simply assembled, and the cell frame may have an integration type structure, such that durability may be improved.

Since the protection plate 21 is not separated in the case in which the cell frame may have an integration type structure, efficiency of an assembling work may be improved, and leakage of the electrolyte may be prevented, such that stable operation may be implemented, and reliability of a device may be improved. The unit frame 10, the bipolar plate 20, and the protection plate 21 are formed so as to have shapes corresponding to each other without a gap, which may assist in efficiently tightly covering the electrolyte channel 11 of the cell frame and forming the integration type structure having excellent durability.

The unit frame 10 and the protection plate 21 may comprise materials having electric insulation, acid resistance, and mechanical strength and be injection molded using materials at least one selected from the group consisting of a vinyl chloride resin, polypropylene, polyethylene, a fluorine resin, an epoxy resin. In the case of an adhesive adhering to the unit frame, the bipolar plate, and the protection plate to each other, any adhesive may be used as long as it has an excellent adhesion property and is not easily deformed at an operation temperature. In addition, the bipolar plate 20 may comprise such as a plastic carbon material, graphite, a carbon microparticle, a material including chlorine and having excellent electric conductivity.

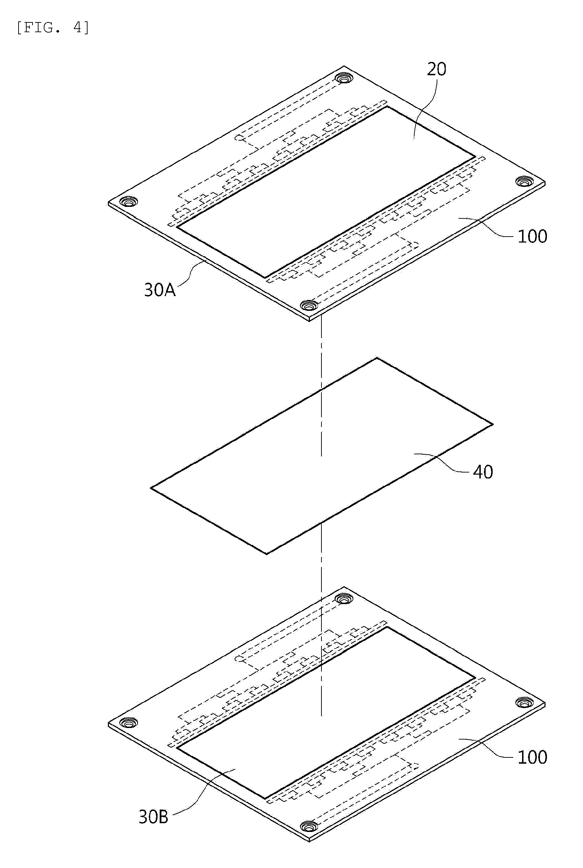

FIG. 4 is a perspective view showing a combination state of the cell frame 100. Referring to FIG. 4, the bipolar plate 20 is disposed at both surfaces of a membrane 40, the protection plate 21 is positioned at an outer peripheral portion of the bipolar plate 20, and the bipolar plate 20 and the protection plate 21 are integrated with a pair of unit frames 10.

The unit frame 10 is adhered to both surfaces of the protection plate 21, a central portion of the protection plate 21 between the pair of unit frames 10 is provided with the bipolar plate 20, and an electrode 30 is disposed between the bipolar plate 20 and the membrane 40. A positive electrode solution is circulated in a positive electrode chamber in which a positive electrode 30A is positioned, and at the same time, a negative electrode solution is circulated in a negative electrode chamber in which a negative electrode 30B is positioned. As described above, the cell frame, the positive electrode 30A, the membrane 40, and the negative electrode 30B are sequentially stacked in plural to form a cell stack, and as the number of stacked cell frames 100 is increased, an output may be further improved.

The electrolyte channel 11 formed on the contact region of each of the unit frames 10 faces the protection plate 21, and the insertion hole 20A of the unit frame 10 in which the electrolyte channel 11 is not formed faces the bipolar plate 20. Since the electrolyte channel 11 formed on the contact region of the unit frame 10 is tightly covered by the protection plate 21, the electrolyte channel 11 may be protected. Since the shapes of the insertion hole 20A, the protection plate 21, and the bipolar plate 20 formed on each of the unit frames 10 correspond to each other, at the time of adhesion, the cell frame may have an integration type structure in which sealability between the unit frame 10, the protection plate 21, and the bipolar plate 20 and durability are excellent.

Since the protection plate 21 is not separated in the case in which the cell frame may have an integration type structure, efficiency of an assembling work may be improved, and leakage of the electrolyte in the cell frame may be prevented, such that stable operation may be implemented, and reliability of a device may be improved. The unit frame 10 and the protection plate 21 are formed so as to have sizes and shapes correspond to each other and are adhered to each other, which may assist in efficiently tightly covering the electrolyte channel 11.

An end cell frame may have a structure in which a single unit frame 10, the bipolar plate 20, and the protection plate 21 are adhered to each other and be installed at a position contacting a current collector positioned at both ends of the cell stack.

According to the present invention, the electrolyte channel positioned at the inner portion of the cell frame is positioned in the contact region of the unit frames, and the protection plate is interposed therebetween, thereby making it possible to prevent the electrolyte from being mixed and leaked. Therefore, a battery cell stack may stably operate, have high efficiency, and improve reliability of the device.

In addition, the protection plate and the unit frame are configured so as to have the shapes and sizes corresponding to each other, such that the protection plate and the unit frame may be integrally adhered to each other, thereby making it possible to improve durability and working efficiency.

Hereinabove, although the present invention is described by specific matters such as concrete components, and the like, exemplary embodiments, and drawings, they are provided only for assisting in the entire understanding of the present invention. In addition, the present invention is not limited to the exemplary embodiments, but various modifications and changes may be made by those skilled in the art to which the present invention pertains from this description. Therefore, the spirit of the present invention should not be limited to the above-described exemplary embodiments and the following claims as well as all modified equally or equivalently to the claims are intended to fall within the scopes and spirits of the invention.

## Claims

1. A cell frame of a redox flow battery, the cell frame comprising:
a pair of unit frames adhered to each other;
a protection plate shared by the unit frames,
wherein each unit frame includes an electrolyte channel formed on a contact region of the unit frame with the protection plate; and
a bipolar plate on which an electrolyte flows, wherein the electrolyte is supplied through the electrolyte channel.

2. The cell frame of claim 1, wherein the protection plate and the bipolar plate are integrated with each other and positioned between the pair of unit frames.

3. The cell frame of claim 1, wherein thicknesses of the protection plate and the bipolar plate are the same.

4. The cell frame of claim 1, wherein the electrolyte channel comprises:
an electrolyte inlet part;
a first distribution channel connected to the electrolyte inlet part;
a first penetration channel
connected to the first distribution channel, and
configured to provide the electrolyte to the bipolar plate;
a second penetration channel configured to discharge the electrolyte from the bipolar plate;
a second distribution channel connected to the second penetration channel; and
an electrolyte outlet part connected to the second distribution channel.

5. The cell frame of claim 1, wherein the unit frame and the protection plate comprise an insulation material.

6. The cell frame of claim 1, wherein the unit frame and the protection plate comprise an acid resistant material.

7. The cell frame of claim 1, wherein the unit frame and the protection plate comprise at least one selected from the group consisting of a vinyl chloride resin, polypropylene, polyethylene, a fluorine resin, an epoxy resin.

8. The cell frame of claim 1, wherein each of the unit frames has the same area as the protection plate.

9. The cell frame of claim 1, wherein the electrolyte channel of each of the unit frames is closed by the protection plate.

10. A redox flow battery, comprising a cell frame which comprises:
a pair of unit frames adhered to each other;
a protection plate between the pair of unit frames;
an electrolyte channel formed on a contact region of each unit frame with the protection plate; and
a bipolar plate positioned at a portion that does not contact the electrolyte channel,
wherein the protection plate is provided at an outer peripheral portion of the bipolar plate.

11. The redox flow battery of claim 10, wherein thicknesses of the protection plate and the bipolar plate are the same.

12. The redox flow battery of claim 10, wherein the unit frame and the protection plate comprise an insulation material.
